# EUROPEAN PATENT SPECIFICATION

(11) **EP 2 089 649 B1**
(45) Date of publication and mention of the grant of the patent: **19.01.2011**
(21) Application number: 07817864.7
(22) Date of filing: 01.11.2007
(51) Int. Cl.: F16K 3/32

(54) **AN ADJUSTABLE REGULATOR INSERT**
VERSTELLBARER REGLEREINSATZ
INSERT RÉGULATEUR AJUSTABLE

(30) Priority: 02.11.2006 DK 200601422
(43) Date of publication of application: 19.08.2009
(73) Proprietor: FlowCon International A/S, 4200 Slagelse (DK)
(72) Inventor: IBSEN, Bjarne Wittendorff, 4200 Slagelse (DK); MØLLER, Carsten Enøe, 4200 Slagelse (DK)
(74) Representative: Wittrup, Flemming
(86) International application number: PCT/DK2007/000468
(87) International publication number: WO 2008/052553

(56) References cited:
- EP-A- 1 067 321
- AT-B- 319 677
- DE-A1- 3 615 432

## Description

The invention concerns an adjustable regulator insert for valves according to the preamble of claim 1.

Such inserts for valves are known from WO 95/12082 where the area of the inlet area is adjustable by having two plates arranged close together with a number of holes, where the plates can be rotated around one common axis. The area of the inlet opening is then the area of the regions where holes in both of the two Individual plates overlap such that a fluid may pass directly through the two plates. The area of the inlet opening may be adjusted by rotating one of the plates into a position where e.g. the holes In one plate partly faces holes in the other plate and partly faces the other solid plate to an extend where the needed area of the inlet opening is achieved. The setting of the area of the inflow opening Is applied for advance setting of the desired constant flow through the insert.

Furthermore, the insert according to WO 95/12082 is configured with a roller membrane that closes off the outflow openings to a smaller or larger degree in response to variation in pressure across the insert, so as to accomplish an essentially constant flow of liquid through the insert.

Often it is necessary to preset this type of inserts for valves to a given maximum flow depending on the installation of which the insert is a part, e.g. for protecting other components. At the same time it is necessary to provide a possibility for automatically adjusting the flow between a minimum flow and this maximum set flow. This automatic adjustment could be in relation to a temperature measurement.

EP 1 067 321 discloses a technique in respect of the above-referenced problem which is solved by means of a plate shaped element which is displaceable in two different directions, such that the displacement in one direction can be adjusted independently of the displacement in the other direction.

The last-mentioned technique is to be somehow mounted in a valve housing however this is not explained in EP 1 067 321. Thus it is obvious to a person skilled in the art that it is important when the valve should be mounted in the valve housing that it is mounted using a well defined rotating position in relation to the valve housing to allow the openings to be connected to the outer connections of the valve.

The purpose of the invention is to provide a valve avoiding the above-mentioned disadvantage. This is achieved in that the insert has sealing means for sealing the inflow opening from the outflow opening, when the insert is placed in the valve housing and in that said insert comprises a plurality of said inflow openings extending along the periphery of the insert.

By distributing the inflow openings in this way the insert can be turned in any rotating position in relation to the valve housing when the insert should be mounted and this eases the mounting considerably. At the same time the position of the inflow openings according to the invention has the advantage that it does not weaken the cylindric wall of the insert considerably which allows for the insert to be produced by plastic.

In the following the invention will be described In further details with reference to the figures.
Figure 1 shows an adjustable regulator insert for a valve according to an embodiment of the invention.
Figure 2 shows a cross sectional view of an adjustable regulator insert for a valve according to an embodiment of the invention.
Figure 3 illustrates the Inner part of the means defining the area of the inlet opening of the insert.
Figure 4 Illustrates a cross sectional view of the inner part of the means defining the area of the inlet opening of the Insert.
Figure 5 illustrates an outer cup shaped part of the insert.
Figure 6 illustrates a cross sectional view of the outer cup shaped part of the insert.
Figure 7 illustrates the principle in an embodiment of the invention with the two plate shaped elements each having an opening.
Figure 8 illustrates a partly exploded view of the insert with a valve housing.
Figure 9 illustrates details of a bayonet socket for connecting a mounting part of the insert to a cup shaped part.

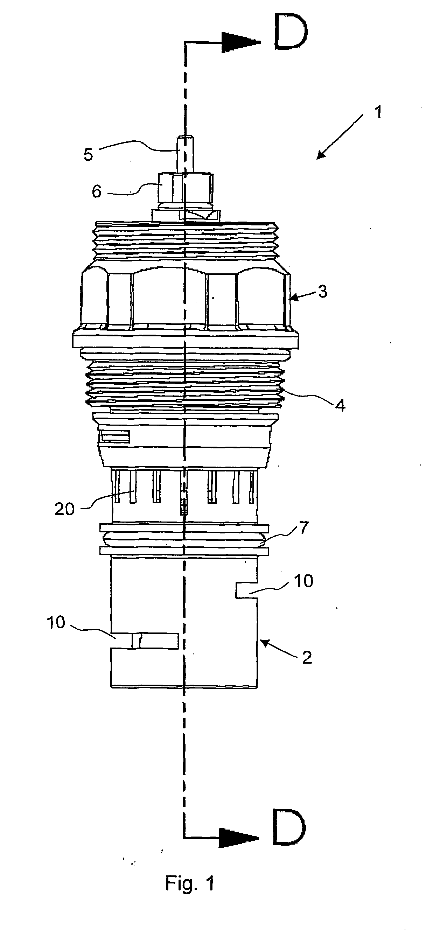

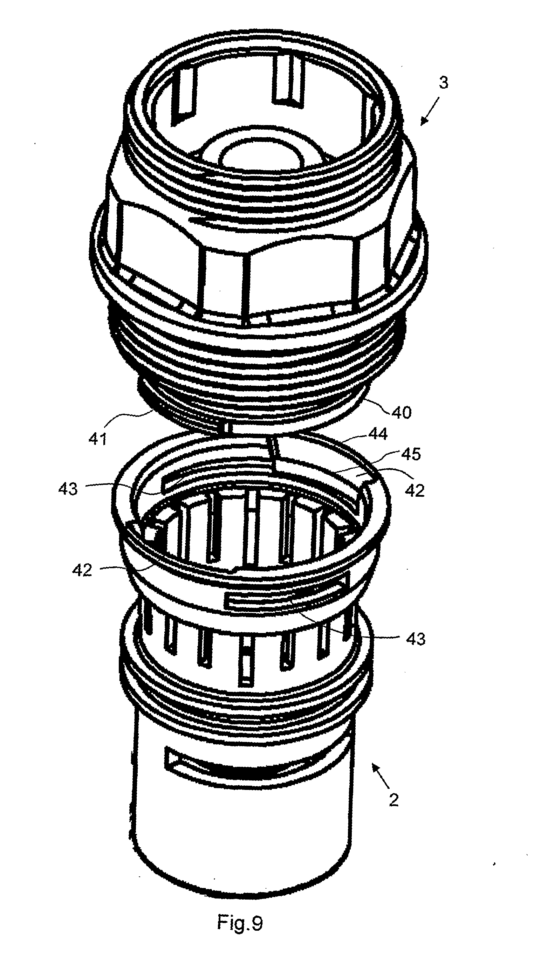

The adjustable regulator insert shown in figure 1 comprises a cup shaped part 2 having inlet openings 10 and outlet openings 20 for the fluid, typically water (e.g. for heating or cooling purposes), and a mounting part 3 e.g. having a thread 4 for placing and securing the insert 1 in a valve housing (not shown). The mounting part 3 is often made from a metal, e.g. brass, while the cup shaped part 2 is often made from a plastic material. The two parts may be connected by a bayonet socket (to be described below according to figure 9).

The insert has sealing means, e.g. an O-ring, for sealing the inflow from the outflow, when the insert is placed in a valve housing. The insert furthermore, comprise adjustments means 5 and 6 adjusting the area of the inflow openings 10. The first adjustment means 5 is moveable in the vertical direction of figure 1, i.e. along the longitudinal axis of the insert 1. This adjustment means 5 is used for adjusting the area of the inflow openings in one direction. The second adjustment means 6 is rotatable around the longitudinal axis of the insert. This second adjustment means is used for adjusting the area of the inflow openings in a second direction. The two adjustment means 5 and 6 can be operated in different ways, i.e. one or both could be operated by an electrical actuator or a motor, or, one or both could be operated manually.

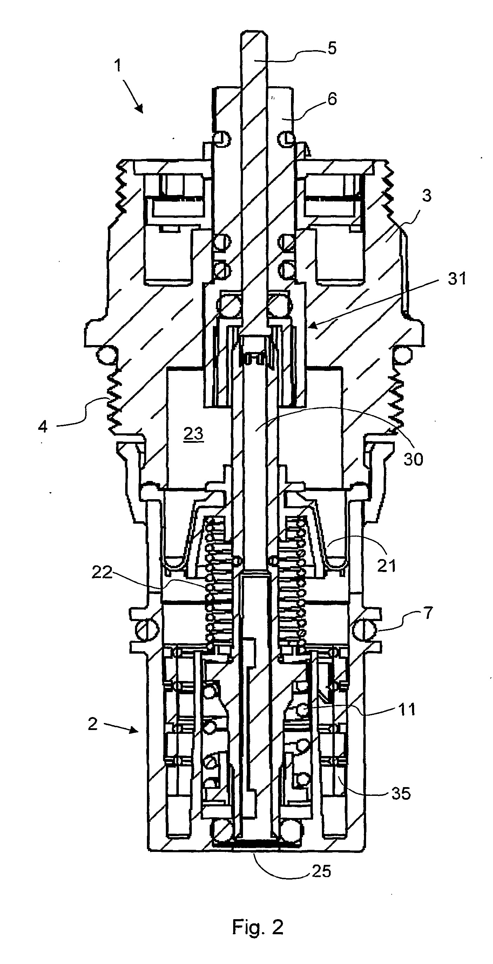

In the cross sectional view of a regulator insert shown in figure 2 it is seen that the adjustment means 5 and 6 are in engagement through a drive mechanism 31 with a central shaft 30 of the insert. The drive mechanism 31 will transfer both a rotational movement of the second adjustment means 6 and a displacement of the first adjustment means 5 to the central shaft 30 of the insert. The displacement of the first adjustment means 5 is transferred to the shaft 30 without displacing the second adjustment means 6.

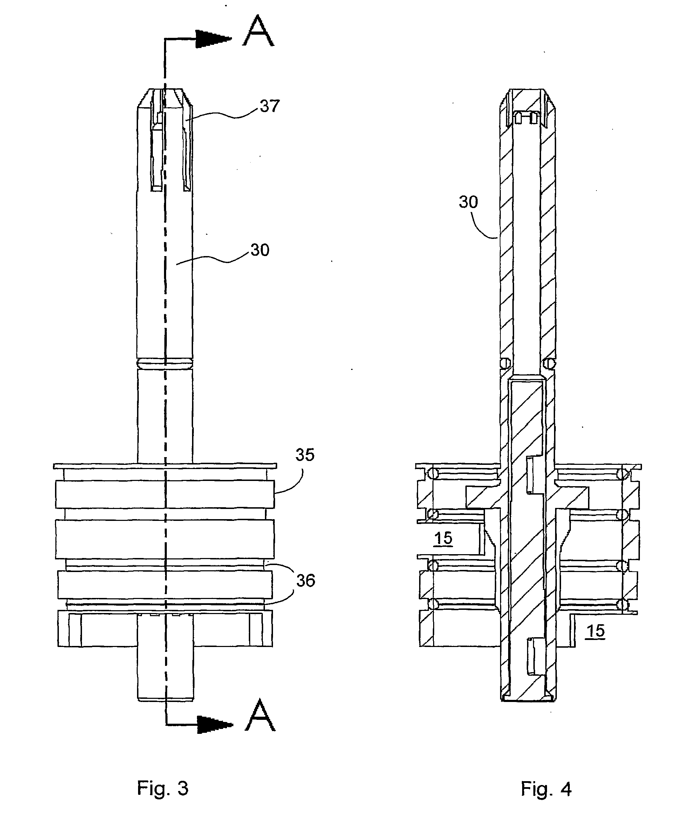

The central shaft 30 continuous towards the bottom 25 of the cup shaped part 2. In the cup shaped part 2 the central shaft 30 is connected to an inner basically cylindrical shaped part 35 (see also figure 3 and 4), which will be rotated with rotation of the shaft 30 and displaced in the longitudinal direction of the insert with a displacement of the shaft. This inner cylindrical shaped part is provided with flow passages 15, which flow passages 15 together with flow passages 16 in the cup shaped part 2 defines the area of the inlet openings 10, of which the area is varied by moving the two sets of flow passages in relation to each other such that they will overlap to a smaller or larger extend. This is described in further details below with reference to figures 3 - 7.

Figure 2 also illustrates the mechanisms for regulating the effective area of outflow openings 20. This mechanism is described in further details in WO 95/12082 and in WO 2005/038314. The mechanism is a part of the flow regulating function of the insert where displacement of the inflow in one direction is applied for setting a maximum flow, and displacement in a second direction is used for setting the actual flow, while the mechanism at the outflow openings 20 is used for ensuring a constant flow despite variations in the pressure difference across the insert.

The mechanism provides a roller membrane 21 at the outflow openings which closes off the outflow openings to a larger or smaller degree, in response to the pressure conditions across the insert. The spring 22 will press the roller membrane 21 away from the outflow openings such that these will be fully open when there is no pressure drop across the insert. The pressure of the fluid at the inlet openings 10 is transferred to the space 23 behind the roller membrane 21 through a passage in the central shaft 30, e.g. from an opening in the bottom 25 of the cup shaped part. When the roller membrane 21 is in balance, the force exerted from the pressure drop across the insert will equals the force from the spring 22. An increased pressure drop will therefore press the roller membrane 21 downwards (in relation to figure 2) and thereby reducing the effective output opening area, while the spring 22 will force the roller membrane upwards (in relation to figure 2) at a reduced pressure drop. Thereby, this mechanism will provide a more constant flow through the insert.

Figure 2 furthermore illustrates that the insert 1 comprise a second spring 11 acting on the combined central shaft 30 and inner cylindrical shaped part 35 in order to press this upwards (in relation to figure 2) such that the first adjustment means 5 is pressed in the direction out of the insert 1. Therefore, when the insert is in use, means such as an actuator needs to be provided for pressing the first adjustment means 5 into the needed position and hold it there, such that the inlet opening will achieve the needed area. If the first adjustment means 5 is not pressed into position, e.g. by an actuator, the inlet opening will ( in a standard version of the insert) due to the pressure of the second spring 11 be pressed to be fully open in the direction controlled by the first adjustment means 5.

Figure 3 shows the combination of the central shaft 30 and the inner basically cylindrical shaped part 35 of the inner part defining the area of the inlet openings of the insert. The two parts will preferably have their longitudinal axis in common, and will be connected by one or a few bridging elements (not shown). The inner cylindrical part will at its outer surface preferably be provided with recesses 36 for placement of sealing means, such as O-rings. These will preferably provide a leak-tight connection to the cup shaped part 2, which is an outer cylindrical part.

It is also seen from figure 3 that the top part of the shaft 30 is provided with slots 37 for engaging with the drive mechanism 31. The first adjustment means 5 are movable within the second adjustment means 6. The first adjustment means will be able to displace the shaft 30, such that engagement means (not shown) of the second adjustment means 6 will stay in engagement with said slots 37. The engagement means will simply be displaced within the slots 37.

Figure 4 shows a cross sectional view of the inner cylindrical part 35 of the section A-A in figure 3. This illustrates two inlet flow passages 15. It is seen that these flow passages 15 is having a length extending along the periphery of the inner cylindrical part 15, and a width extending in a direction substantially parallel with the directional axis of the shaft 30. Often the length of the inlet flow passages will extend 90 -180 degrees around the 360 degree periphery of the cylinder, preferably the length of the inlet flow passages will extend 120 - 160 degrees, and even more preferably it will extend approximately 140 degrees around the periphery of the cylinder.

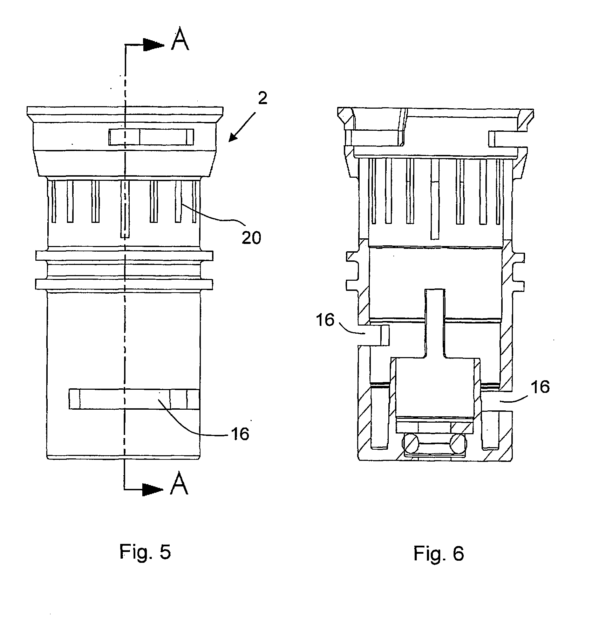

Figure 5 shows the cup shaped part 2 with one visible flow passage 16 for inlet, and a number of outlet openings 20. It is seen that the outlet openings 20 differ in their length, which has the effect that the roller membrane 21 will not be able to close the outlet openings 20 completely and momentarily. This will help in avoiding pulsations in the flow system of which the regulator insert is a part. Figure 6 shows a cross sectional view of the cup shaped outer part 2 of the insert.

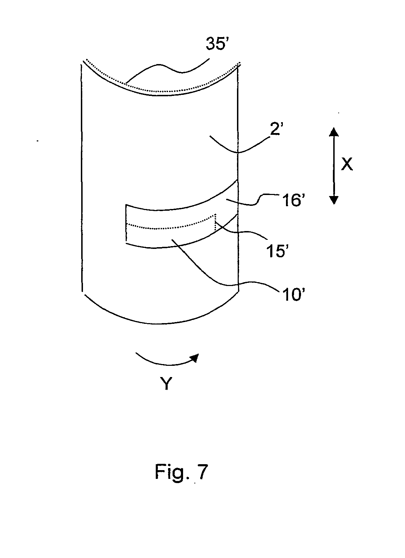

Figure 7 illustrates the basic principle of adjustment of the inlet area according to a preferred embodiment of the invention where a first plate shaped element 2', comprising a first flow passage 16', and a second plate shaped element 35' comprising a second flow passage 15' are displaceable relative to each other. The second plate shaped element 35' is displaceable in the X direction indicated in figure 7, and independently of this displacement it can also be moved in a rotational direction Y indicated in figure 7.

The active area of the inlet opening 10' through which the fluid will flow is defined by the overlapping area of the first 16' and the second 15' flow passages.

The plate shaped elements could have any shape but are preferably cylindrically shaped. The important issue is that the two plate shaped elements can be displaced independently in two directions, such that when you have adjusted the displacement between the first 16' and the second 15' flow passages, a maximum obtainable overlapping area is defined.

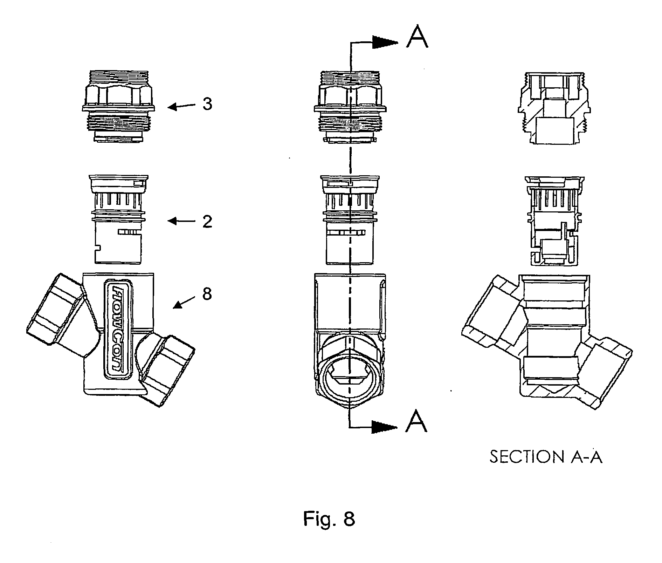

Figure 8 illustrates how the cup shaped part 2 of the insert and the mounting part 3 of the insert is mounted in a valve housing 8. The parts may be assembled by a thread, by clicking means or by a bayonet socket (i.e. a bayonet joint). Preferably the cup shaped part 2 the mounting part 3 are assembled by a bayonet socket.

Figure 9 illustrates such a bayonet socket where the mounting part 3 of the insert is having a ring part 40 in the end which is to be connected to the cup shaped part 2. This ring part has protrusions 41 extending along the periphery of the ring part 40. Preferably the ring part 40 is provided with at least two protrusions 41, where two protrusions 41 is the preferred embodiment.

The upper circular part (facing the mounting part 3) of the cup shaped part 2 is provided with a number of recesses 42 equal to the number of protrusions 41 in the ring part 40. The recesses are formed slightly conical such that the inner radius of the recess 42 in relation to the centre axis of the cup shaped part 2, is larger at the top part 44 of the recess 42 than the equivalent inner radius at the bottom part 45 of the recess 42. This means that when the mounting part 3 (made from a metal) is inserted into the cup shaped part 2 (made from a plastic material), the protrusions 41 of the mounting part 3 will exert a pressure on the upper part of the cup shaped part 2 as the protrusions 41 are moved from the top part 44 of the recesses towards the bottom part 45 of the recesses 42.

In connection to the bottom part 45 of the recess 42 a slot 43 is provided. The protrusion 41 can, when reaching the bottom 45 of the recess 42, be entered into this slot by a rotational movement of the mounting part 3 in relation to the cup shaped part 2, where the rotational movement is in relation to the longitudinal axis of the insert.

As the inner radius in the slot 43 in relation to the centre axis of the cup shaped part 2, is larger than the equivalent inner radius at the bottom part 45 of the recess 42, the protrusion 41 will be locked in the position when it has been fully entered into the slot 43. This locking is due to the slight expansion of the cup shaped part 2 when the protrusions 41 are situated at the bottom part 45 of the recesses 42. The expansion is possible because of some elasticity in the plastic material from which the cup shaped part 2 is made. When the protrusion 41 is moved from the bottom part 45 of the recess 42 and into the slot 43, the expansion disappears.

When the insert 1 is placed in the valve housing 8 a close fitting between this upper part of the cup shaped part 2 and the valve housing 8 ensures that the upper part of the cup shaped part 2 will not be able to expand. The valve housing will prevent such expansion. Therefore, the bayonet socket assembling the mounting part 3 and the cup shaped part 2 will be kept in a locked position as long as the insert is placed in the valve housing 8.

## Claims

1. An adjustable regulator insert (1) for a valve housing, in particular for controlling liquid flow in a plant for central heating or air-conditioning, which insert (1) comprises an inflow opening (10) and an outflow opening (20), wherein the area of at least one of said openings (10, 20) is adjustable, said at least one opening being defined by an overlap between a
- first flow passage (16) in a first plate shaped element, and a
- second flow passage (15) in a second plate shaped element, said first and second plate shaped elements being displaceable relative to each other, such that said first flow passage (16) and said second flow passage (15) in the two plates are displaceable relative to each other in order to vary the area of said opening,
**characterized in that** said insert (1) has sealing means for sealing the inflow opening (10) from the outflow opening (20), when the insert is placed in the valve housing and **in that** said insert (1) comprises a plurality of said inflow openings (10) extending along the periphery of the insert (1).

2. An adjustable regulator insert according to claim 1, wherein there are two inflow openings (10).

3. An adjustable regulator insert according to claim 1, wherein the area of said inflow opening (10) is adjustable by said first and second plate shaped elements being displaceable relative to each other.

4. An adjustable regulator insert according to any one of the claims 1 - 3, wherein the first and the second plate shaped elements are arranged with intermediate sealing means.

5. An adjustable regulator insert according to any one of the claims 1 - 4, wherein the two different directions of possible independent displacement are substantially perpendicular to each other.

6. An adjustable regulator insert according to any one of the previous claims, wherein the first plate shaped element is an outer cylindrical sleeve and the second plate shaped element is an inner cylindrical sleeve placed inside the outer cylindrical sleeve.

7. An adjustable regulator insert according to claim 6, wherein the inner cylindrical sleeve is connected to a shaft, such that a rotation of the shaft will rotate the inner cylindrical sleeve around the axis of the inner sleeve, and said shaft being displaceable in the axial direction of the shaft, such that a displacement in this direction will be transferred to a displacement of the inner cylindrical sleeve.

8. An adjustable regulator insert according to claim 6 or 7, wherein the length of the inlet openings will extend an angle of the periphery of the cup shaped cylinder of 90 - 180 degrees, preferably 120 - 160 degrees, and even more preferably approximately 140 degrees.

9. An adjustable regulator insert according to any one of the previous claims, wherein the displacement of the second plate shaped element in one direction is performed by an actuator.

## Patentansprüche

1. Verstellbarer Reglereinsatz (1) für ein Ventilgehäuse, besonders zur Steuerung einer Flüssigkeitsströmung in einer Anlage zur Zentralheizung oder Luftkonditionierung, welcher Einsatz (1) eine Einlauföffnung (10) und eine Auslauföffnung (20) umfasst, wobei der Bereich zumindest einer der Öffnungen (10, 20) verstellbar ist, wobei die zumindest eine Öffnung durch eine Überlappung zwischen einer
- ersten Strömungspassage (16) in einem ersten plattenförmigen Element und einer
- zweiten Strömungspassage (15) in einem zweiten plattenförmigen Element
definiert ist, welches erste und zweite plattenförmige Element relativ zueinander verschiebbar sind, so dass die erste Strömungspassage (16) und die zweite Strömungspassage (15) in den beiden Platten zum Variieren des Bereichs der Öffnung relativ zueinander verschiebbar sind,
**dadurch gekennzeichnet, dass** der Einsatz (1) Dichtungsmittel zum Abdichten der Einlauföffnung (10) gegen die Auslauföffnung (20) aufweist, wenn der Einsatz im Ventilgehäuse untergebracht ist, und **dadurch**, dass der Einsatz (1) eine Vielzahl von den sich entlang der Peripherie des Einsatzes (1) erstreckenden Einlauföffnungen (10) umfasst.

2. Verstellbarer Reglereinsatz nach Anspruch 1, wobei zwei Einlauföffnungen (10) vorgesehen sind.

3. Verstellbarer Reglereinsatz nach Anspruch 1, wobei der Bereich der Einlauföffnung (10) durch das erste und zweite relativ zueinander verschiebbare plattenförmige Element verstellbar ist.

4. Verstellbarer Reglereinsatz nach irgendeinem der Ansprüche 1-3, wobei das erste und das zweite plattenförmige Element mit dazwischenliegenden Dichtungsmitteln angeordnet sind.

5. Verstellbarer Reglereinsatz nach irgendeinem der Ansprüche 1-4, wobei die beiden verschiedenen Richtungen einer möglichen unabhängigen Verschiebung im Wesentlichen senkrecht zueinander sind.

6. Verstellbarer Reglereinsatz nach irgendeinem der vorhergehenden Ansprüche, wobei das erste plattenförmige Element eine zylindrische Außenbüchse ist, und das zweite plattenförmige Element eine im Inneren der zylindrischen Außenbüchse untergebrachte zylindrische Innenbüchse ist.

7. Verstellbarer Reglereinsatz nach Anspruch 6, wobei die zylindrische Innenbüchse mit einer Welle verbunden ist, so dass eine Rotation der Welle eine Rotation der zylindrischen Innenbüchse um die Achse der Innenbüchse bewirken wird, und die Welle in der axialen Richtung der Welle verschiebbar ist, so dass eine Verschiebung in dieser Richtung auf eine Verschiebung der zylindrischen Innenbüchse übertragen wird.

8. Verstellbarer Reglereinsatz nach Anspruch 6 oder 7, wobei sich die Länge der Einlassöffnungen unter einem Winkel der Peripherie des becherförmigen Zylinders von 90-180 Grad, bevorzugt 120-160 Grad, und noch mehr bevorzugt ungefähr 140 Grad, erstrecken wird.

9. Verstellbarer Reglereinsatz nach irgendeinem der vorhergehenden Ansprüche, wobei die Verschiebung des zweiten plattenförmigen Elements in einer Richtung von einem Aktuator ausgeführt ist.

## Revendications

1. Insert régulateur ajustable (1) pour un boîtier de soupape, en particulier destiné à commander l'écoulement de liquide dans une installation de chauffage central ou de climatisation, insert (1) qui comprend une ouverture d'admission (10) et une ouverture de sortie (20), dans lequel la zone d'au moins l'une desdites ouvertures (10, 20) est ajustable, ladite au moins une ouverture étant définie par un recouvrement entre
- un premier passage d'écoulement (16) dans un premier élément en forme de plaque, et
- un deuxième passage d'écoulement (15) dans un deuxième élément en forme de plaque,
ledit premier élément en forme de plaque et ledit deuxième élément en forme de plaque étant aptes à se déplacer l'un par rapport à l'autre si bien que ledit premier passage d'écoulement (16) et ledit deuxième passage d'écoulement (15) dans les deux plaques sont aptes à se déplacer l'un par rapport à l'autre afin de pouvoir varier la zone de ladite ouverture,
**caractérisé en ce que** ledit insert (1) présente des moyens d'étanchéité destinés à rendre étanche l'ouverture d'admission (10) de l'ouverture de sortie (20), lorsque l'insert est placé dans le boîtier de soupape, et **en ce que** ledit insert (1) comprend une pluralité desdites ouvertures d'admission (10) s'étendant le long de la périphérie de l'insert (1).

2. Insert régulateur ajustable selon la revendication 1, où ledit insert comprend deux ouvertures d'admission (10).

3. Insert régulateur ajustable selon la revendication 1, où la zone de ladite ouverture d'admission (10) est ajustable par ledit premier élément en forme de plaque et ledit deuxième élément en forme de plaque étant aptes à se déplacer l'un par rapport à l'autre.

4. Insert régulateur ajustable selon l'une quelconque des revendications 1 à 3, où ledit premier élément en forme de plaque et ledit deuxième élément en forme de plaque sont arrangés avec des moyens d'étanchéité intermédiaires.

5. Insert régulateur ajustable selon l'une quelconque des revendications 1 à 3, où les deux différentes directions du déplacement indépendant possible sont essentiellement perpendiculaires l'une à l'autre.

6. Insert régulateur ajustable selon l'une quelconque des revendications précédentes, où ledit premier élément en forme de plaque est un manchon cylindrique extérieur, et le deuxième élément en forme de plaque est un manchon cylindrique intérieur situé à l'intérieur du manchon cylindrique extérieur.

7. Insert régulateur ajustable selon la revendication 6, où le manchon cylindrique intérieur est relié à un arbre, si bien qu'une rotation de l'arbre fera tourner le manchon cylindrique intérieur autour de l'axe du manchon intérieur, et ledit arbre étant apte à se déplacer dans la direction axiale de l'arbre, si bien qu'un déplacement dans cette direction sera transféré à un déplacement du manchon cylindrique intérieur.

8. Insert régulateur ajustable selon la revendication 6 ou 7, où la longueur des ouvertures d'admission étendra un angle de la périphérie du cylindre cupulaire de 90 à 180 degrés, préférablement 120 à 160 degrés, et encore plus préférablement environ 140 degrés.

9. Insert régulateur ajustable selon l'une quelconque des revendications précédentes, où le déplacement du deuxième élément en forme de plaque dans une direction est effectué par un actionneur.
